(19) Europäisches Patentamt
European Patent Office
Office européen des brevets

(11) **EP 4 726 335 A1**

(12) **EUROPEAN PATENT APPLICATION**

(43) Date of publication:
**15.04.2026 Bulletin 2026/16**

(51) International Patent Classification (IPC):
***G01D 5/353*** (2006.01)    ***G01K 11/32*** (2021.01)
***G01K 11/322*** (2021.01)

(21) Application number: **25203905.2**

(22) Date of filing: **23.09.2025**

(52) Cooperative Patent Classification (CPC):
**G01D 5/35364; G01K 11/32; G01K 11/322**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.10.2024 JP 2024176766**

(71) Applicant: **Yokogawa Electric Corporation Tokyo 180-8750 (JP)**

(72) Inventors:
- **Watanabe, Fumie**
  **Musashino-shi, Tokyo, 180-8750 (JP)**
- **Suzuki, Yuta**
  **Musashino-shi, Tokyo, 180-8750 (JP)**
- **Tezuka, Shin-ichirou**
  **Musashino-shi, Tokyo, 180-8750 (JP)**
- **Honma, Masayoshi**
  **Musashino-shi, Tokyo, 180-8750 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **OPTICAL FIBER CHARACTERISTIC MEASUREMENT SYSTEM AND HUMIDITY MEASUREMENT METHOD**

(57) An optical fiber characteristic measurement system (1) according to the present disclosure includes an optical fiber (20) including a wet portion and a dry portion, and an optical fiber characteristic measurement apparatus (10) configured to measure a Brillouin frequency shift of Brillouin scattered light from the optical fiber (20). The optical fiber characteristic measurement apparatus (10) measures humidity based on a first Brillouin frequency shift, which is a Brillouin frequency shift at the wet portion, and a second Brillouin frequency shift, which is a Brillouin frequency shift at the dry portion.

## FIG. 1

## Description

CROSS-REFERENCE TO RELATED APPLICATION

The present application claims priority to Japanese Patent Application No. 2024-176766 filed on October 8, 2024, the entire contents of which are incorporated herein by reference.

TECHNICAL FIELD

The present disclosure relates to an optical fiber characteristic measurement system and a humidity measurement method.

BACKGROUND

Techniques for measuring humidity using optical fibers have been considered.
For example, Patent Literature (PTL) 1 discloses a technique for measuring humidity based on a wet-bulb temperature and a dry-bulb temperature, in which the temperature of a part, covered with a moisturizing material, of an optical fiber sensor contained in a breathable container that is placed near a road is taken as the wet-bulb temperature, and the temperature of the uncovered part is taken as the dry-bulb temperature.
For example, PTL 2 discloses a technique for measuring humidity using the Rayleigh frequency shift.

CITATION LIST

Patent Literature

PTL 1: JP H10-104363 A
PTL 2: JP 2021-38963 A

SUMMARY

The technique described in PTL 1 uses an optical fiber sensor placed inside a breathable container placed near the road to perform measurements, and therefore the position at which humidity is measured cannot be changed. Furthermore, the technique described in PTL 1 has a spatial resolution of about 1 m at the measurement position when measuring humidity and is therefore unable to measure humidity with high spatial resolution.
The technique described in PTL 2 measures humidity using the Rayleigh frequency shift, but since only relative temperature can be measured when using the Rayleigh frequency shift, it is necessary to measure absolute temperature using a different method and then measure humidity. Therefore, measuring the humidity is time-consuming.
It would therefore be helpful to provide an optical fiber characteristic measurement system and a humidity measurement method that are capable of easily measuring humidity with high spatial resolution.
An optical fiber characteristic measurement system according to several embodiments is an optical fiber characteristic measurement system comprising an optical fiber including a wet portion and a dry portion, and an optical fiber characteristic measurement apparatus configured to measure a Brillouin frequency shift of Brillouin scattered light from the optical fiber, wherein the optical fiber characteristic measurement apparatus measures humidity based on a first Brillouin frequency shift, which is a Brillouin frequency shift at the wet portion, and a second Brillouin frequency shift, which is a Brillouin frequency shift at the dry portion. According to this optical fiber characteristic measurement system, humidity can be measured easily with high spatial resolution.
In the optical fiber characteristic measurement system according to an embodiment, the optical fiber characteristic measurement apparatus may the optical fiber characteristic measurement apparatus may measure a first temperature, which is a temperature of the wet portion, based on the first Brillouin frequency shift, measure a second temperature, which is a temperature of the dry portion, based on the second Brillouin frequency shift, and measure the humidity based on the second temperature and a temperature difference obtained by subtracting the first temperature from the second temperature. This configuration enables measurement of humidity based on temperature, which is measured based on the Brillouin frequency shift.
In the optical fiber characteristic measurement system according to an embodiment, the optical fiber characteristic measurement apparatus may control positions at which the first Brillouin frequency shift and the second Brillouin frequency shift are measured by adjusting a modulation frequency of light emitted to the optical fiber. This configuration enables the position at which humidity is measured to be changed continuously with high spatial resolution.
In the optical fiber characteristic measurement system according to an embodiment, a range of the wet portion may be a range of a spatial resolution when the optical fiber characteristic measurement apparatus measures the Brillouin frequency shift. This configuration makes it possible to limit the range of the wet portion to a narrow range.
In the optical fiber characteristic measurement system according to an embodiment, a distance from a position of the wet portion where the first Brillouin frequency shift is measured to a position of the dry portion where the second Brillouin frequency shift is measured may be equal to or less than a predetermined distance. This configuration enables measurement of the first temperature and the second temperature at a close distance.
In the optical fiber characteristic measurement system according to an embodiment, the optical fiber may include a plurality of the wet portions. This configuration makes it possible to measure humidity at a plurality of locations easily.

In the optical fiber characteristic measurement system according to an embodiment, the optical fiber characteristic measurement apparatus may be an apparatus for measuring characteristics of the optical fiber by Brillouin optical correlation domain reflectometry or Brillouin optical correlation domain analysis. This configuration enables the position at which humidity is measured to be controlled with high spatial resolution.

A humidity measurement method according to several embodiments is a humidity measurement method in an optical fiber characteristic measurement system comprising an optical fiber including a wet portion and a dry portion, and an optical fiber characteristic measurement apparatus configured to measure a Brillouin frequency shift of Brillouin scattered light from the optical fiber, the humidity measurement method comprising measuring a first Brillouin frequency shift, which is a Brillouin frequency shift at the wet portion, measuring a second Brillouin frequency shift, which is a Brillouin frequency shift at the dry portion, and measuring humidity based on the first Brillouin frequency shift and the second Brillouin frequency shift. According to this humidity measurement method, humidity can be measured easily with high spatial resolution.

According to the present disclosure, it is possible to provide an optical fiber characteristic measurement system and a humidity measurement method that are capable of easily measuring humidity with high spatial resolution.

BRIEF DESCRIPTION OF THE DRAWINGS

In the accompanying drawings:

FIG. 1 is a diagram illustrating a schematic configuration of an optical fiber characteristic measurement system according to an embodiment;
FIG. 2 is a diagram illustrating a schematic configuration of the optical fiber characteristic measurement apparatus illustrated in FIG. 1; and
FIG. 3 is a diagram illustrating a state in which a Brillouin frequency shift is measured in an optical fiber characteristic measurement system according to an embodiment.

DETAILED DESCRIPTION

Embodiments of the present disclosure are described below with reference to the drawings.

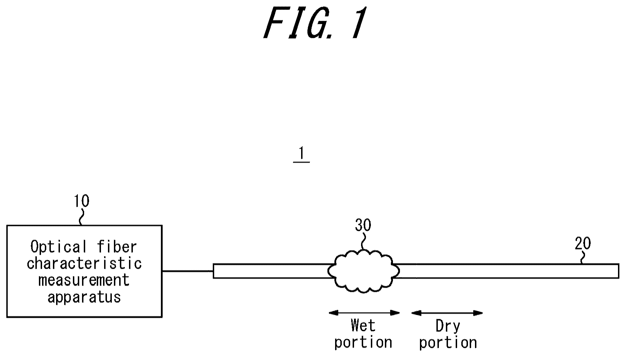

FIG. 1 is a diagram illustrating a schematic configuration of an optical fiber characteristic measurement system according to an embodiment. The optical fiber characteristic measurement system 1 includes an optical fiber characteristic measurement apparatus 10, an optical fiber 20, and absorbent cotton 30.
The optical fiber characteristic measurement apparatus 10 is an apparatus that can measure the Brillouin frequency shift of Brillouin scattered light from the optical fiber 20. The Brillouin scattered light includes a Brillouin gain spectrum. The Brillouin gain spectrum includes a frequency component at approximately 11 GHz. The optical fiber characteristic measurement apparatus 10 can measure the Brillouin frequency shift, which is the amount of shift of the peak of the Brillouin gain spectrum.
The optical fiber characteristic measurement apparatus 10 may be an apparatus that measures the characteristics of the optical fiber 20 to be measured by, for example, Brillouin optical correlation domain reflectometry (BOCDR).
The optical fiber 20 may be a normal optical fiber used for BOCDR measurements or the like. The optical fiber 20 may be attached to, for example, an object for which humidity is to be measured. The object to be measured may be, for example, a building, a road, a bridge, a dam, a tunnel, an aircraft, or the like.
The optical fiber 20 has a wet portion and a dry portion. The wet portion is the portion of the optical fiber 20 that is covered with moisture. The dry portion is that portion of the optical fiber 20 that is not covered with moisture.
FIG. 1 illustrates an example in which the wet portion is covered with absorbent cotton 30 that contains moisture. Note that this is merely an example, and the wet portion may be covered with moisture by any method. For example, the wet portion may be covered with any material that retains moisture. The position of the wet portion can be easily changed by, for example, changing the position of the absorbent cotton 30.
The optical fiber characteristic measurement apparatus 10 can measure the temperature at any position in the optical fiber 20 with high spatial resolution by measuring the Brillouin frequency shift. The spatial resolution when the optical fiber characteristic measurement apparatus 10 measures the temperature at an arbitrary position of the optical fiber 20 is, for example, about 10 cm.
The range of the wet portion of the optical fiber 20 may be a range approximately equal to the spatial resolution when the optical fiber characteristic measurement apparatus 10 measures the Brillouin frequency shift. For example, when the spatial resolution is about 10 cm, the range of the wet portion may be about 10 cm.
The position of the dry portion where the optical fiber characteristic measurement apparatus 10 measures the temperature by measuring the Brillouin frequency shift may be any position other than the wet portion, but is preferably a position adjacent to the wet portion. Therefore, the distance from the position of the wet portion to the position of the dry portion is preferably equal to or less than a predetermined distance. The predetermined distance may be approximately the same distance as the spatial resolution when the optical fiber characteristic measurement apparatus 10 measures the Brillouin frequency shift. For example, when the spatial resolution is about 10 cm, the predetermined distance may be about 10 cm to 30 cm.

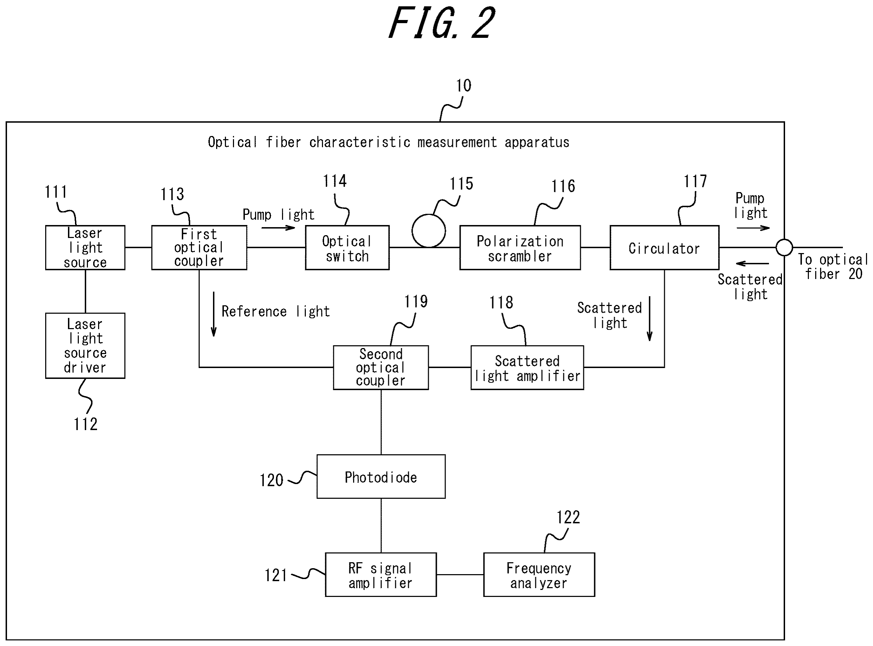

FIG. 2 is a diagram illustrating a schematic configuration of the optical fiber characteristic measurement apparatus 10. In the present embodiment, an example will be described in which the optical fiber characteristic measurement apparatus 10 is a device that measures the characteristics of the optical fiber 20 by BOCDR.

The optical fiber characteristic measurement apparatus 10 includes a laser light source 111, a laser light source driver 112, a first optical coupler 113, an optical switch 114, a delay fiber 115, a polarization scrambler 116, a circulator 117, a scattered light amplifier 118, a second optical coupler 119, a photodiode 120, an RF (Radio Frequency) signal amplifier 121, and a frequency analyzer 122.

The laser light source 111 outputs a laser light. The laser light source 111 may be, for example, a laser diode. The laser light source 111 can output a frequency-modulated laser light. The laser light outputted from the laser light source 111 is frequency modulated by the laser light source driver 112.

The laser light source 111 outputs the frequency-modulated laser light to the first optical coupler 113.

The laser light source driver 112 supplies a sine wave signal to the laser light source 111 to frequency-modulate the laser light outputted by the laser light source 111. The laser light source driver 112 may be a circuit with any configuration that can frequency-modulate the laser light outputted by the laser light source 111.

The first optical coupler 113 splits the laser light supplied from the laser light source 111 into pump light and reference light. The first optical coupler 113 outputs the pump light to the optical switch 114. The first optical coupler 113 outputs the reference light to the second optical coupler 119.

The optical switch 114 chops the pump light supplied from the first optical coupler 113 to generate pulsed light. The optical switch 114 outputs the pump light, which has become pulsed light, to the delay fiber 115.

The delay fiber 115 delays the pump light supplied from the optical switch 114 and outputs the result to the polarization scrambler 116.

The polarization scrambler 116 changes the polarization state of the pump light supplied from the delay fiber 115 to unpolarized light and outputs the result to the circulator 117.

The circulator 117 emits the pump light supplied from the polarization scrambler 116 to the optical fiber 20. When the pump light is emitted to the optical fiber 20, the optical fiber 20 generates Brillouin scattered light. The circulator 117 outputs the Brillouin scattered light incident from the optical fiber 20 to the scattered light amplifier 118.

The scattered light amplifier 118 amplifies the Brillouin scattered light supplied from the circulator 117 and outputs the result to the second optical coupler 119. The scattered light amplifier 118 may be, for example, an Erbium Doped Fiber Amplifier (EDFA).

The second optical coupler 119 combines the Brillouin scattered light supplied from the scattered light amplifier 118 and the reference light supplied from the first optical coupler 113 and outputs the result to the photodiode 120.

The photodiode 120 receives the combined light supplied from the second optical coupler 119 and performs heterodyne detection. The photodiode 120 converts the received light into an electrical signal and outputs the result to the RF signal amplifier 121.

The RF signal amplifier 121 amplifies the electrical signal supplied from the photodiode 120 and outputs the result to the frequency analyzer 122.

The frequency analyzer 122 performs frequency analysis on the electrical signal supplied from the RF signal amplifier 121, that is, the electrical signal corresponding to the light combined by the second optical coupler 119.

The electrical signal supplied to the frequency analyzer 122 from the RF signal amplifier 121 includes a Brillouin gain spectrum due to the Brillouin scattered light. The Brillouin gain spectrum includes a frequency component at approximately 11 GHz.

The frequency analyzer 122 measures the Brillouin frequency shift, which is the amount of shift of the peak of the Brillouin gain spectrum. The Brillouin frequency shift depends to the first order on the temperature of the optical fiber 20.

The optical fiber characteristic measurement apparatus 10 can control the position at which the Brillouin frequency shift is measured by adjusting the modulation frequency of the light emitted to the optical fiber 20. The optical fiber characteristic measurement apparatus 10 adjusts the modulation frequency of the light emitted to the optical fiber 20 by changing the frequency of the sine wave signal that the laser light source driver 112 supplies to the laser light source 111.

The position z at which the Brillouin frequency shift is measured is expressed, for example, by the following Equations (1) and (2). The position z at which the Brillouin frequency shift is measured is a position that, with respect to the end of the optical fiber 20 connected to the optical fiber characteristic measurement apparatus 10, is a distance z towards the other end of the optical fiber 20.

$$z = -\frac{L_d}{2} + m d_m \quad (1)$$

$$d_m = \frac{v_g}{2 f_m} \quad (2)$$

In the Equations, $L_d$ is the length of the delay fiber 115, m is an integer, $v_g$ is the speed of light in the optical fiber 20, and $f_m$ is the modulation frequency.

The optical fiber characteristic measurement apparatus 10 can continuously change the position z at which the Brillouin frequency shift is measured by adjusting the modulation frequency.

Next, a process by which the optical fiber characteristic measurement apparatus 10 measures humidity will be described.

The optical fiber characteristic measurement apparatus 10 emits pump light into the optical fiber 20 with the modulation frequency adjusted so that the position where the Brillouin frequency shift is to be measured is the position of the wet portion and measures the Brillouin frequency shift at the wet portion. Hereinafter, the Brillouin frequency shift at the wet portion may be referred to as the "first Brillouin frequency shift".

The optical fiber characteristic measurement apparatus 10 emits pump light into the optical fiber 20 with the modulation frequency adjusted so that the position where the Brillouin frequency shift is to be measured is the position of the dry portion and measures the Brillouin frequency shift at the dry portion. Hereinafter, the Brillouin frequency shift at the dry portion may be referred to as the "second Brillouin frequency shift".

When the Brillouin frequency shift at the dry portion is measured, it is preferable to adjust the modulation frequency so that the distance from the position of the wet portion to the position of the dry portion is equal to or less than a predetermined distance.

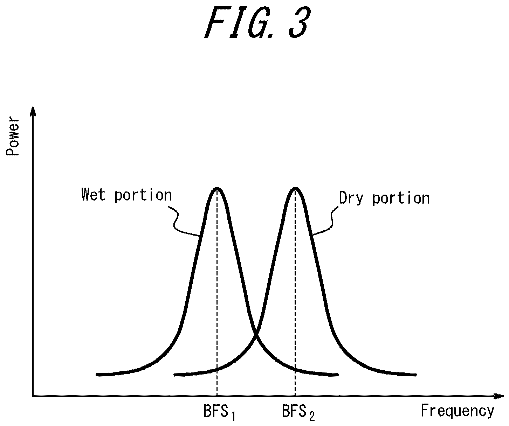

FIG. 3 illustrates an example of how a first Brillouin frequency shift $BFS_1$, which is the Brillouin frequency shift at the wet portion, and a second Brillouin frequency shift $BFS_2$, which is the Brillouin frequency shift at the dry portion, are measured in the optical fiber characteristic measurement system 1.

The optical fiber characteristic measurement apparatus 10 measures the humidity of the wet portion based on the measured first Brillouin frequency shift and second Brillouin frequency shift. The measurement of humidity is explained in more detail below.

The Brillouin frequency shift depends to the first order on the temperature of the position in the optical fiber 20 where the Brillouin frequency shift is being measured. Therefore, the optical fiber characteristic measurement apparatus 10 can calculate the temperature of the wet portion as an absolute temperature based on the measured first Brillouin frequency shift. That is, the optical fiber characteristic measurement apparatus 10 can measure the temperature of the wet portion as an absolute temperature based on the first Brillouin frequency shift. The optical fiber characteristic measurement apparatus 10 can also calculate the temperature of the dry portion as an absolute temperature based on the measured second Brillouin frequency shift. That is, the optical fiber characteristic measurement apparatus 10 can measure the temperature of the dry portion as an absolute temperature based on the second Brillouin frequency shift.

Hereinafter, the temperature of the wet portion may be referred to as the "first temperature". The temperature of the dry portion may be referred to as the "second temperature".

The optical fiber characteristic measurement apparatus 10 can calculate the humidity based on the second temperature, which is the temperature of the dry portion, and the temperature difference obtained by subtracting the first temperature, which is the temperature of the wet portion, from the second temperature, which is the temperature of the dry portion. That is, the optical fiber characteristic measurement apparatus 10 can measure the humidity based on the second temperature and the temperature difference obtained by subtracting the first temperature from the second temperature.

<Plurality of wet portions>

The optical fiber 20 may include a plurality of wet portions. In this case, the optical fiber characteristic measurement apparatus 10 can measure the humidity of each of the plurality of wet portions by adjusting the modulation frequency. Since the humidity of each of the plurality of wet portions can be measured simply by adjusting the modulation frequency in this way, the optical fiber characteristic measurement system 1 can efficiently measure the humidity at a plurality of locations.

According to the optical fiber characteristic measurement system 1 of the embodiment as described above, it is possible to measure humidity easily with high spatial resolution. More specifically, the optical fiber characteristic measurement system 1 includes the optical fiber 20 that has the wet portion and the dry portion, and the optical fiber characteristic measurement apparatus 10 that is configured to measure the Brillouin frequency shift of the Brillouin scattered light from the optical fiber 20. The optical fiber characteristic measurement apparatus 10 measures humidity based on the first Brillouin frequency shift, which is the Brillouin frequency shift at the wet portion, and the second Brillouin frequency shift, which is the Brillouin frequency shift at the dry portion. In this way, since the optical fiber characteristic measurement apparatus 10 is an apparatus that measures the Brillouin frequency shift, the optical fiber characteristic measurement apparatus 10 can easily measure the first Brillouin frequency shift, which is the Brillouin frequency shift at the wet portion, and the second Brillouin frequency shift, which is the Brillouin frequency shift at the dry portion, with high spatial resolution. The optical fiber characteristic measurement apparatus 10 can then measure humidity based on the first Brillouin frequency shift and the second Brillouin frequency shift measured with high spatial resolution. Therefore, according to the optical fiber characteristic measurement system 1 of an embodiment, it is possible to measure humidity easily with high spatial resolution.

It will be apparent to those skilled in the art that the present disclosure may be realized in certain forms other than the above-described embodiments without departing from the spirit or essential characteristics of the present disclosure. Accordingly, the foregoing description is merely illustrative and is not limiting. The scope of the disclosure is defined by the appended claims, not by the foregoing description. Among all modifications, those within a range of equivalents to the present disclosure shall be considered as being included in the present disclosure.

For example, the arrangement and number of each of the above-mentioned components are not limited to those illustrated in the above description and the drawings. The arrangement and number of each component may be configured freely as long as the corresponding function can be realized.

For example, the optical fiber characteristic measurement apparatus 10 has been described as measuring the Brillouin frequency shift of the optical fiber 20 by BOCDR, but this configuration is not limiting. The optical fiber characteristic measurement apparatus 10 may measure the Brillouin frequency shift of the optical fiber 20 by, for example, Brillouin optical correlation domain analysis (BOCDA).

Examples of some embodiments of the present disclosure are described below. However, it should be noted that the embodiments of the present disclosure are not limited to these examples.

[Appendix 1] An optical fiber characteristic measurement system comprising:

an optical fiber including a wet portion and a dry portion; and
an optical fiber characteristic measurement apparatus configured to measure a Brillouin frequency shift of Brillouin scattered light from the optical fiber, wherein
the optical fiber characteristic measurement apparatus measures humidity based on a first Brillouin frequency shift, which is a Brillouin frequency shift at the wet portion, and a second Brillouin frequency shift, which is a Brillouin frequency shift at the dry portion.

[Appendix 2] The optical fiber characteristic measurement system according to appendix 1, wherein the optical fiber characteristic measurement apparatus

measures a first temperature, which is a temperature of the wet portion, based on the first Brillouin frequency shift,
measures a second temperature, which is a temperature of the dry portion, based on the second Brillouin frequency shift, and
measures the humidity based on the second temperature and a temperature difference obtained by subtracting the first temperature from the second temperature.

[Appendix 3] The optical fiber characteristic measurement system according to appendix 1 or 2, wherein the optical fiber characteristic measurement apparatus controls positions at which the first Brillouin frequency shift and the second Brillouin frequency shift are measured by adjusting a modulation frequency of light emitted to the optical fiber.

[Appendix 4] The optical fiber characteristic measurement system according to any one of appendices 1 to 3, wherein a range of the wet portion is a range of a spatial resolution when the optical fiber characteristic measurement apparatus measures the Brillouin frequency shift.

[Appendix 5] The optical fiber characteristic measurement system according to any one of appendices 1 to 4, wherein a distance from a position of the wet portion where the first Brillouin frequency shift is measured to a position of the dry portion where the second Brillouin frequency shift is measured is equal to or less than a predetermined distance.

[Appendix 6] The optical fiber characteristic measurement system according to any one of appendices 1 to 5, wherein the optical fiber includes a plurality of the wet portions.

[Appendix 7] The optical fiber characteristic measurement system according to any one of appendices 1 to 6, wherein the optical fiber characteristic measurement apparatus is an apparatus for measuring characteristics of the optical fiber by Brillouin optical correlation domain reflectometry or Brillouin optical correlation domain analysis.

[Appendix 8] A humidity measurement method in an optical fiber characteristic measurement system comprising an optical fiber including a wet portion and a dry portion, and an optical fiber characteristic measurement apparatus configured to measure a Brillouin frequency shift of Brillouin scattered light from the optical fiber, the humidity measurement method comprising:

measuring a first Brillouin frequency shift, which is a Brillouin frequency shift at the wet portion;
measuring a second Brillouin frequency shift, which is a Brillouin frequency shift at the dry portion; and
measuring humidity based on the first Brillouin frequency shift and the second Brillouin frequency shift.

[Appendix 9] The humidity measurement method according to appendix 8, wherein the measuring of the humidity comprises

measuring a first temperature, which is a temperature of the wet portion, based on the first Brillouin frequency shift,

measuring a second temperature, which is a temperature of the dry portion, based on the second Brillouin frequency shift, and
measuring the humidity based on the second temperature and a temperature difference obtained by subtracting the first temperature from the second temperature.

[Appendix 10] The humidity measurement method according to appendix 8 or 9, wherein

the measuring of the first Brillouin frequency shift comprises controlling a position at which the first Brillouin frequency shift is measured by adjusting a modulation frequency of light emitted to the optical fiber, and
the measuring of the second Brillouin frequency shift comprises controlling a position at which the second Brillouin frequency shift is measured by adjusting a modulation frequency of light emitted to the optical fiber.

[Appendix 11] The humidity measurement method according to any one of appendices 8 to 10, wherein a range of the wet portion is a range of a spatial resolution when the optical fiber characteristic measurement apparatus measures the Brillouin frequency shift.
[Appendix 12] The humidity measurement method according to any one of appendices 8 to 11, wherein a distance from a position of the wet portion where the first Brillouin frequency shift is measured to a position of the dry portion where the second Brillouin frequency shift is measured is equal to or less than a predetermined distance.
[Appendix 13] The humidity measurement method according to any one of appendices 8 to 12, wherein the optical fiber includes a plurality of the wet portions.
[Appendix 14] The humidity measurement method according to any one of appendices 8 to 13, wherein the optical fiber characteristic measurement apparatus is an apparatus for measuring characteristics of the optical fiber by Brillouin optical correlation domain reflectometry or Brillouin optical correlation domain analysis.

**Claims**

1. An optical fiber characteristic measurement system comprising:

   an optical fiber including a wet portion and a dry portion; and
   an optical fiber characteristic measurement apparatus configured to measure a Brillouin frequency shift of Brillouin scattered light from the optical fiber, wherein
the optical fiber characteristic measurement apparatus measures humidity based on a first Brillouin frequency shift, which is a Brillouin frequency shift at the wet portion, and a second Brillouin frequency shift, which is a Brillouin frequency shift at the dry portion.

2. The optical fiber characteristic measurement system according to claim 1, wherein
the optical fiber characteristic measurement apparatus

   measures a first temperature, which is a temperature of the wet portion, based on the first Brillouin frequency shift,
   measures a second temperature, which is a temperature of the dry portion, based on the second Brillouin frequency shift, and
   measures the humidity based on the second temperature and a temperature difference obtained by subtracting the first temperature from the second temperature.

3. The optical fiber characteristic measurement system according to claim 1, wherein the optical fiber characteristic measurement apparatus controls positions at which the first Brillouin frequency shift and the second Brillouin frequency shift are measured by adjusting a modulation frequency of light emitted to the optical fiber.

4. The optical fiber characteristic measurement system according to claim 1, wherein a range of the wet portion is a range of a spatial resolution when the optical fiber characteristic measurement apparatus measures the Brillouin frequency shift.

5. The optical fiber characteristic measurement system according to claim 1, wherein a distance from a position of the wet portion where the first Brillouin frequency shift is measured to a position of the dry portion where the second Brillouin frequency shift is measured is equal to or less than a predetermined distance.

6. The optical fiber characteristic measurement system according to claim 1, wherein the optical fiber includes a plurality of the wet portions.

7. The optical fiber characteristic measurement system according to claim 1, wherein the optical fiber characteristic measurement apparatus is an apparatus for measuring characteristics of the optical fiber by Brillouin optical correlation domain reflectometry or Brillouin optical correlation domain analysis.

8. A humidity measurement method in an optical fiber characteristic measurement system comprising an optical fiber including a wet portion and a dry portion, and an optical fiber characteristic measurement apparatus configured to measure a Brillouin frequency shift of Brillouin scattered light from the optical fiber, the humidity measurement method comprising:

measuring a first Brillouin frequency shift, which is a Brillouin frequency shift at the wet portion;
measuring a second Brillouin frequency shift, which is a Brillouin frequency shift at the dry portion; and
measuring humidity based on the first Brillouin frequency shift and the second Brillouin frequency shift.

9. The humidity measurement method according to claim 8, wherein
the measuring of the humidity comprises

measuring a first temperature, which is a temperature of the wet portion, based on the first Brillouin frequency shift,
measuring a second temperature, which is a temperature of the dry portion, based on the second Brillouin frequency shift, and
measuring the humidity based on the second temperature and a temperature difference obtained by subtracting the first temperature from the second temperature.

10. The humidity measurement method according to claim 8, wherein

the measuring of the first Brillouin frequency shift comprises controlling a position at which the first Brillouin frequency shift is measured by adjusting a modulation frequency of light emitted to the optical fiber, and
the measuring of the second Brillouin frequency shift comprises controlling a position at which the second Brillouin frequency shift is measured by adjusting a modulation frequency of light emitted to the optical fiber.

11. The humidity measurement method according to claim 8, wherein a range of the wet portion is a range of a spatial resolution when the optical fiber characteristic measurement apparatus measures the Brillouin frequency shift.

12. The humidity measurement method according to claim 8, wherein a distance from a position of the wet portion where the first Brillouin frequency shift is measured to a position of the dry portion where the second Brillouin frequency shift is measured is equal to or less than a predetermined distance.

13. The humidity measurement method according to claim 8, wherein the optical fiber includes a plurality of the wet portions.

14. The humidity measurement method according to claim 8, wherein the optical fiber characteristic measurement apparatus is an apparatus for measuring characteristics of the optical fiber by Brillouin optical correlation domain reflectometry or Brillouin optical correlation domain analysis.

# *FIG. 1*

<u>1</u>

*FIG. 2*

Optical fiber characteristic measurement apparatus

10

EP 4 726 335 A1

# FIG. 3

Europäisches
Patentamt

European
Patent Office

Office européen
des brevets

**EUROPEAN SEARCH REPORT**

Application Number

EP 25 20 3905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/063209 A1 (NAKAMICHI MASANORI [JP] ET AL) 4 March 2021 (2021-03-04) * Abstract, Desc. [0001], [0014]-[0016], [0035]-[0036], [0072]-[0074], [0088], Figs. 1, 11 * | 1,2,5-9, 12-14 | INV. G01D5/353 G01K11/32 G01K11/322 |
| X | CN 110 887 527 B (UNIV XIAMEN) 11 June 2024 (2024-06-11) * Abstract, Desc. [0001], [0003], [0006], [0013], [0024]-[0029], Fig. 1, claim 1 * | 1,3-6,8, 10-13 | |
| X | CN 116 453 754 A (UNIV SOUTH CHINA TECH) 18 July 2023 (2023-07-18) * Abstract, Desc. [0001], [0046]-[0058], Fig. 1 * | 1,8 | |
| X | US 2012/310535 A1 (TAKEI FUMIO [JP] ET AL) 6 December 2012 (2012-12-06) * Abstract, Desc. [0002], [0027]-[0037], Fig. 1 * | 1,8 | |
| A | US 2014/374578 A1 (BERTRAND JOHAN [FR] ET AL) 25 December 2014 (2014-12-25) * Abstract, Desc. [0036], [0093]- [0098], [0108], Fig. 1 * | 1-14 | TECHNICAL FIELDS SEARCHED (IPC) G01D G01K |

The present search report has been drawn up for all claims

| Place of search | Date of completion of the search | Examiner |
|---|---|---|
| Munich | 4 March 2026 | Reim, Klaus |

EPO FORM 1503 03.82 (P04C01)

## ANNEX TO THE EUROPEAN SEARCH REPORT
## ON EUROPEAN PATENT APPLICATION NO.

EP 25 20 3905

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | | Publication date | Patent family member(s) | | | Publication date |
|---|---|---|---|---|---|---|---|
| US 2021063209 | A1 | | 04-03-2021 | JP | 7177991 | B2 | 25-11-2022 |
| | | | | JP | 2021038963 | A | 11-03-2021 |
| | | | | US | 2021063209 | A1 | 04-03-2021 |
| CN 110887527 | B | | 11-06-2024 | NONE | | | |
| CN 116453754 | A | | 18-07-2023 | NONE | | | |
| US 2012310535 | A1 | | 06-12-2012 | JP | 5445668 | B2 | 19-03-2014 |
| | | | | JP | WO2011111178 | A1 | 27-06-2013 |
| | | | | US | 2012310535 | A1 | 06-12-2012 |
| | | | | WO | 2011111178 | A1 | 15-09-2011 |
| US 2014374578 | A1 | | 25-12-2014 | CA | 2860251 | A1 | 04-07-2013 |
| | | | | CN | 104094102 | A | 08-10-2014 |
| | | | | EP | 2798334 | A1 | 05-11-2014 |
| | | | | FR | 2985315 | A1 | 05-07-2013 |
| | | | | JP | 6157501 | B2 | 05-07-2017 |
| | | | | JP | 2015503737 | A | 02-02-2015 |
| | | | | KR | 20140119039 | A | 08-10-2014 |
| | | | | RU | 2014131483 | A | 20-02-2016 |
| | | | | US | 2014374578 | A1 | 25-12-2014 |
| | | | | WO | 2013098289 | A1 | 04-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024176766 A
- JP H10104363 A
- JP 2021038963 A